# EUROPÄISCHE PATENTSCHRIFT

(11) **EP 1 559 604 B1**
(45) Veröffentlichungstag und Bekanntmachung des Hinweises auf die Patenterteilung: **05.11.2008**
(21) Anmeldenummer: 05001832.4
(22) Anmeldetag: 28.01.2005
(51) Int. Cl.: B60K 7/00, B60K 17/14

(54) **Gekühlte elektrische Antriebseinheit für ein Kraftfahrzeug**
Cooled electric drive unit for a motor vehicle
Unité de propulsion électrique refroidie pour un véhicule

(30) Priorität: 29.01.2004 DE 102004004617; 15.09.2004 DE 102004044688
(43) Veröffentlichungstag der Anmeldung: 03.08.2005
(73) Patentinhaber: Magnet-Motor Gesellschaft für magnetmotorische Technik mbH, D-82319 Starnberg (DE)
(72) Erfinder: Steffen, Jens, 82399 Raisting (DE); Hagenlocher, Roland, 82152 Planegg (DE); Walter, Fritz, 82399 Raisting (DE); Müller, Dr. Anton, 82327 Tutzing (DE); Ehrhart, Dr. Peter, 81375 München (DE)
(74) Vertreter: Klunker . Schmitt-Nilson . Hirsch

(56) Entgegenhaltungen:
- WO-A-03/065546
- CA-A1- 2 347 281
- US-A- 3 035 652
- US-A- 4 799 564
- US-A- 5 327 034

## Beschreibung

Gegenstand der Erfindung ist eine elektrische Antriebseinheit für ein Kraftfahrzeug, die aufweist:
(a) einen Achsstummel;
(b) einen Elektromotor mit einem bezüglich des Achsstummels festgelegten Stator und einem bezüglich des Achsstummels rotierbar gelagerten Rotor;
(c) ein Getriebe, dessen Eingang für Drehmomentübertragung mit dem Rotor in Verbindung steht;
(d) einen Radträger, der bezüglich des Achsstummels rotierbar gelagert ist und für Drehmomentübertragung mit dem Ausgang des Getriebes in Verbindung steht;
   wobei
(e) zur Kühlung des Rotors des Elektromotors Luftkühlung mit Luftumwälzung vorgesehen ist;
(f) und im Elektromotor eine Wärmesenke zur Wärmeaufnahme aus der umgewälzten Luft vorgesehen ist.

Vorzugsweise arbeitet die Luftkühlung mit zirkulierendem Luftstrom und ist so ausgelegt, dass mindestens ein Teil des zirkulierenden Luftstroms an einer Oberfläche entlangströmt, die Wärmezugang von dem Getriebe hat, so dass ein wesentlicher Teil der Verlustwärme des Getriebes an den zirkulierenden Luftstrom übergeht.

Die Erfindung verwirklicht die neuartige Konzeption, die Wärme aufnehmende, umgewälzte, vorzugsweise einen zirkulierenden Luftstrom aufweisende, Luft mittels einer für diesen Zweck vorgesehenen Wärmesenke rückzukühlen. Das ist grundlegend unterschiedlich von z. B. laufendem Ansaugen frischer Luft von außen und laufendem Ausblasen erwärmter Luft.

Bevorzugte Ausgestaltungen der Wärmesenke sind Wärme abführendes Metallelement, insbesondere aus Metall mit guter Wärmeleitfähigkeit, Bereich mit Oberflächenvergrößerung, und Luft/Flüssigkeit-Wärmetauscher. Die Wärmesenke gibt die von ihr aufgenommene Wärme "wärmestromab" weiter. Im Fall des genannten Luft/Flüssigkeit-Wärmetauschers an Flüssigkeit. Ein anderes Beispiel ist Weitergabe durch Wärmeleitung an einen kühleren Bereich des Elektromotors. Das Dokument US 5 327 034 offenbart einen Antriebseinheit mit Kühlung durch einen inneren zirkulierenden Luftstrom im Elektromotor.

Erfindungsgemäss wird zur Kühlung des Stators des Elektromotors eine Flüssigkeitskühlung vorgesehen. Die im Stator entstehende Verlustwärmemenge ist normalerweise mehrfach so groß wie die im Rotor entstehende Verlustwärmemenge.

Der Elektromotor kann mit Aussenrotor oder mit Innenrotor ausgeführt sein.

Wo Wärmeübergang von einer Feststoff-Oberfläche an Luft oder umgekehrt stattfinden soll (das ist insbesondere der Rotor und/oder die Wärmesenke und/oder die dem Elektromotor zugewandte Oberfläche des Getriebes), werden in Weiterbildung der Erfindung Merkmale zur Verbesserung des Wärmeübergangs vorgesehen. Insbesondere seien in diesem Zusammenhang angesprochen: Oberflächenrauhigkeit (sogar bis hin zu kleinen spitzen Vorsprüngen oder Ausbildung mit feinen Rillen), um die an der Oberfläche anhaftende Grenzschicht zumindest teilweise zu durchdringen; Turbulenzerzeuger z. B. im Sinne von Oberflächenprofilierung; Strömungsleitflächen, die wie Schaufeln wirken, um eine Luftströmung zu erzeugen.

Vorzugsweise weist der Rotor Öffnungen auf, welche sich zwischen der dem Getriebe näheren Rotorseite und der dem Getriebe ferneren Rotorseite erstrecken. Mittels dieser Öffnungen kann man eine günstigere Luftströmungsführung erreichen.

Vorzugsweise ist an dem Radträger eine Reifenfelge befestigt.

Weiterer Gegenstand der Erfindung ist ein Kraftfahrzeug, das mindestens eine elektrische Antriebseinheit oder eine Radantriebseinheit (d. h. elektrische Antriebseinheit plus ein an dem Radträger der Antriebseinheit befestigtes Kraftfahrzeug-Rad), wie sie in der vorliegenden Anmeldung offenbart sind, aufweist.

Bei den nachfolgenden Ausführungen im allgemeinen Teil der Beschreibung wird an diversen Stellen in erster Linie auf "elektrische Antriebseinheit mit Kühlung des Getriebes über Wärmeabgabe an den im Elektromotor zirkulierenden Luftstrom" und "Luft/Flüssigkeit-Wärmetauscher zur Rückkühlung des Luftstroms" und "Elektromotor mit Außenrotor" und "luftgekühlter Stator" eingegangen. Es wird betont, dass die nachfolgenden Ausführungen im allgemeinen Teil der Beschreibung sinngemäß auch für elektrische Antriebseinheiten gelten, bei denen nicht ein wesentlicher Teil der Verlustwärme des Getriebes an den Luftstrom abgeführt wird und/oder bei denen kein Luft/Flüssigkeit-Wärmetauscher im Luftstrom vorgesehen ist und/oder bei denen ein Innenrotor vorgesehen ist und/oder bei denen eine Flüssigkeitskühlung für den Stator vorgesehen ist.

Das bei der Antriebseinheit vorhandene Kühlungssystem ist so aufgebaut, dass - beim Betrieb der Antriebseinheit - Verlustwärme des Elektromotors (hauptsächlich stammend aus sogenannten Eisenverlusten infolge fortlaufender Ummagnetisierung von bewickelten Polen und aus sogenannten Kupferverlusten wegen des elektrischen Widerstands der Drähte der Bewicklung der Statorpole) an den im Inneren des Elektromotors zirkulierenden Luftstrom abgegeben wird. In der technischen Praxis wird normalerweise die Gesamt-Verlustwärme nicht zu 100 % an den zirkulierenden Luftstrom abgegeben, weil z.B. das Motorgehäuse auch Wärme, die ihm direkt eingeleitet worden ist, an die Außenumgebung abgibt. Zur Rückkühlung des Luftstroms ist ein Luft/Flüssigkeit-Wärmtauscher vorgesehen. Die im Wärmetauscher von der Flüssigkeit aufgenommene Wärme muss letztlich nach außen hin abgegeben werden, in der Regel über einen Flüssigkeit/Luft-Wärmetauscher zur Abgabe an die umgebende Luft. Das Kühlungssystem hat die weitere Besonderheit, dass es auch zur gezielten Abfuhr von Verlustwärme des Getriebes vorgesehen ist (wiederum in der Regel nicht der gesamten Verlustwärme des Getriebes, weil ein Teil der Verlustwärme des Getriebes z.B. über Gehäusebereiche des Getriebes, die nicht in die Funktion des Kühlungssystems eingebunden sind, nach außen abgeführt wird). Das Kühlungssystem ist so ausgebildet, dass mindestens ein Teil des zirkulierenden Luftstroms an einer Oberfläche entlang strömt, der Wärme von dem Getriebe zugeht. Die nachfolgenden Ausführungen werden deutlicher vor Augen führen, dass diese, durch Entlangströmen des zirkulierenden Luftstroms gekühlte Oberfläche entweder ein Bestandteil des Getriebes sein kann und/oder ein Bestandteil des Elektromotors sein kann, dem auf irgendeine Weise Wärme von dem Getriebe übertragen wird. Bei der Antriebseinheit leistet somit das Kühlungssystem sowohl ein Kühlen des Elektromotors als auch ein Kühlen des Getriebes. Dadurch kann man das Getriebe mit höherer Dichte der Übertragungsleistung bauen als bisher, weil Verlustwärme aus dem Getriebe mit höherer Effizienz abgeführt wird.

Die primäre Aufnahme von Verlustwärme durch den zirkulierenden Luftstrom hat den Vorteil, dass der Luftstrom besonders unkompliziert mit den hierfür wichtigen Bestandteilen des Elektromotors, auch wenn es sich um Bestandteile mit komplexer Geometrie handelt, in Kontakt gebracht werden kann. Als ein Beispiel werden die Wickelköpfe der Bewicklung der Pole genannt. Der (Gesamt-)Luftstrom kann sich z.B. auf einem Teil seines Zirkulationsweges auch in mehrere Teil-Luftströme verzweigen.

Das Kühlungssystem ist so ausgebildet, dass seine Wärmeabfuhrleistung zur Bewältigung der erforderlichen Wärmeabfuhr aus dem Elektromotor und zur Bewältigung der erforderlichen Wärmeabfuhr aus dem Getriebe ausreicht, ohne dass hierbei unerwünscht hohe Temperaturen des zirkulierenden Luftstroms oder der Bauteile des Elektromotors und des Getriebes entstehen. Die Wärmeabfuhrleistung des Kühlungssystems ist in der Regel höher als sie auslegungsmäßig gemessen wäre, wenn das Kühlungssystem zwar Wärme aus dem Elektromotor abführt, aber im wesentlichen keine Wärme von dem Getriebe.

Vorzugsweise ist der Elektromotor als Elektromotor mit Außenrotor ausgebildet. Nochmals stärker bevorzugt ist die Ausbildung mit Außenrotor mit einem sich im wesentlichen radial erstreckenden Rotorboden, wobei sich der Rotorboden auf der dem Getriebe zugewandten Seite des Elektromotors befindet.

Der Luftspalt zwischen dem Getriebe und dem Rotorboden ist so ausgelegt, dass Wärmetransport von dem Getriebe zu dem Rotorboden gefördert wird. Bevorzugte Maßnahmen dazu sind: schmale Ausbildung des Luftspalts; Oberflächenvergrößerung, insbesondere Verrippung, an dem Getriebe und/oder an dem Rotorboden; Turbulenzerzeuger, die zugleich auch Oberflächenvergrößerung darstellen können, an dem Getriebe und/oder dem Rotorboden. Turbulenzerzeuger fördern, dass die Luft in dem Luftspalt nicht zu sehr ruhend bleibt; es ergibt sich ein besserer Wärmeübergang von dem Getriebe an die Luft im Luftspalt und von der Luft im Luftspalt an den Rotorboden. Außerdem verbessert sich der Luftaustausch aus dem Luftspalt in den anschließenden Raum des Motorinneren.

Ein radikalerer Weg der Wärmeabfuhr aus dem Luftspalt ergibt sich, wenn im radial inneren Bereich des Luftspalts Öffnungen vorgesehen sind, die durch den Rotorboden führen. Diese Öffnungen können vorteilhafterweise umfangsmäßig am Rotorboden verteilt sein. Die Öffnungen schaffen die wichtigste Voraussetzung dafür, dass der Luftspalt von einem Teil-Luftstrom durchströmt wird. Dieser Teil-Luftstrom führt direkt Wärme von dem angrenzenden Oberflächenteil des Getriebes und damit von dem Getriebe weg. Außerdem ergibt sich ein besserer Wärmeübergang über den Luftspalt hinweg zu dem Rotorboden als wenn die Luft in dem Luftspalt quasi in Ruhe wäre.

Der Rotorboden kann auf seiner dem Getriebe zugewandten Seite wie Schaufeln wirkende Strömungsleitflächen aufweisen, um eine Luftströmung mit Radialkomponente in dem Luftspalt zu erzeugen. Man kann die Strömungsleitflächen so auslegen, dass durch sie oder großenteils durch sie die Zirkulation des Luftstroms bewirkt wird.

Bevorzugt ist die Antriebseinheit so ausgelegt, dass sich folgender Zirkulationsweg des Luftstroms ergibt: Der Luftstrom bzw. der an der dem Getriebe abgewandten Seite des Rotorbodens strömende Teil des Luftstroms strömt zwischen dem Rotorboden und einer Stirnseite des Stators mit Radialkomponente nach außen; der Luftstrom bzw. der Teil des Luftstroms strömt dann durch den zylindrischen Luftspalt zwischen dem Stator und dem Rotor mit Axialkomponente; vorzugsweise strömt dann der Luftstrom bzw. der Teil des Luftstroms zwischen einer Stirnseite des Rotors und einer Gegenfläche des Stators mit Radialkomponente nach außen; dann strömt der Luftstrom bzw. der Teil des Luftstroms mit Radialkomponente nach innen; schließlich schließt sich der Zirkulationsweg des Luftstroms mit Axialkomponente der Strömung.

Vorzugsweise ist der Rotorboden auf seiner dem Getriebe abgewandten Seite und/oder die genannte Stirnseite des Rotors mit wie Schaufeln wirkenden Strömungsleitflächen ausgestattet, um Luftströmung mit Radialkomponente zu erzeugen. Diese Strömungsleitflächen können die Zirkulation des Luftstroms oder einen Teil der Zirkulation des Luftstroms bewirken.

Vorzugsweise ist ein Einbauteil am Rotorboden, insbesondere ein plattenartiger Träger eines Resolvers zum Liefern von Drehstellungsinformation des Rotors, zum Zwecke der Wärmeleitungsverbesserung dünn ausgebildet. Plattenartige Träger von Resolvern bestehen typischerweise aus faserverstärktem Kunststoff. Hier greift man zu einer Plattenstärke von 0,25 bis 0,5 mm, wohingegen früher Plattenstärken von in der Gegend von 1,5 mm eingesetzt worden sind.

Vorzugsweise sind die Öffnungen im Rotorboden und ggf. die wie Schaufeln wirkenden Strömungsleitflächen so ausgebildet, dass ein Teil des Gesamt-Luftstroms durch den Luftspalt zwischen dem Getriebe und dem Rotorboden geht und ein Teil des Gesamt-Luftstroms entlang der dem Getriebe abgewandten Seite des Rotorbodens geht. In welchem Strömungsmengen-Verhältnis diese beiden Teilströme stehen, entscheidet man am besten danach, von welcher Wärmequelle stammend wie viel Wärme abgeführt werden muss.

Den genannten Luft/Flüssigkeit-Wärmetauscher kann man radial innen an den für die Motorfunktion aktiven Bereich des Stators setzen (wo normalerweise gut Platz dafür ist) oder stirnseitig an einen geeigneten Bereich des Stators setzen, vorzugsweise stirnseitig an den für die Motorfunktion aktiven Bereich. Der für die Motorfunktion aktive Bereich des Stators ist der die Statorpole und -bei den meisten Ausführungsformen - die Bewicklung des Stators aufweisende Bereich.

Vorzugsweise ist die dem Elektromotor zugewandte Begrenzungswand des Getriebes ein rotierendes Teil, wobei stärker bevorzugt die Drehzahl dieser Begrenzungswand unterschiedlich von der Drehzahl des Rotors des Elektromotors ist.

Weitere bevorzugte Ausgestaltungen sind in den folgenden, durchnumerierten Absätzen wiedergegeben. Die dortigen Merkmale sind, soweit weitere Erläuterungen geboten sind, anhand des weiter unten zu beschreibenden Ausführungsbeispiels weiter erläutert:
1. Antriebseinheit,
   wobei das Getriebe ein Planetengetriebe mit einem Sonnenrad, Planetenrädern, einem Planetenträger und einem Hohlrad ist.
2. Antriebseinheit,
   wobei das die Planetengetriebe ein Planetengetriebe mit Stufenplanetenrädern ist.
3. Antriebseinheit,
   wobei das Getriebe als Modul von der Antriebseinheit demontierbar ist.
4. Antriebseinheit,
   wobei das Getriebemodul zusammen mit einem Radträger-Teil demontierbar ist.
5. Antriebseinheit,
   wobei der Hauptteil des Rotors des Elektromotors, nach Lösen von seinem Lagerungsbereich, in Axialrichtung von der Antriebseinheit demontierbar ist.
6. Antriebseinheit,
   wobei der Stator des Elektromotors in Axialrichtung von der Antriebseinheit demontierbar ist.
7. Antriebseinheit,
   wobei an dem Radträger eine Reifenfelge, vorzugsweise eine Standardfelge, befestigt ist.
8. Antriebseinheit,
   wobei an dem Radträger ein Kettenrad befestigt ist.
9. Antriebseinheit,
   wobei das Getriebe an der fahrzeugäußeren Seite der Antriebseinheit positioniert ist.
10. Antriebseinheit,
   wobei an der dem Getriebe abgewandten Seite des Radträgers eine Bremsscheibe oder eine Bremstrommel vorgesehen ist.
11. Antriebseinheit,
   wobei in dem Drehmomentübertragungsweg zwischen dem Elektromotor und dem Getriebe eine lösbare Verbindung vorgesehen ist.
12. Antriebseinheit,
   wobei ein Steckersystem zur elektrischen und kühlungsmäßigen Anbindung des Elektromotors vorgesehen ist.
13. Antriebseinheit,
   wobei der Elektromotor als Bremse betreibbar ist.
14. Antriebseinheit,
   wobei der Elektromotor mit dauermagnetischer Erregung am Rotor ausgebildet ist.

An dieser Stelle wird darauf hingewiesen, dass der Begriff "Radträger" nicht dahingehend einschränkend zu verstehen ist, dass er beim Betrieb unbedingt mit einem Fahrzeugrad, welches auf dem Untergrund oder einer vorbereiteten Bahn abrollt, versehen sein muss. Alternativen sind möglich. Als weitere bevorzugte Möglichkeit wird ein Kettenrad genannt, welches z.B. eine Raupenkette eines Raupenfahrzeugs antreibt, z.B. im Fall eines Erdbewegungsfahrzeugs. Als weitere Alternative sei die Befestigung eines Zahnrads an dem Radträger genannt, welches z.B. bei einer Zahnradbahn mit einer stationären Zahnstange zusammenwirken kann oder z.B. über drehende Zwischenteile auf das Antriebsrad eines Kraftfahrzeugs arbeiten kann.

Als Beispiele für Kraftfahrzeuge, die vorzugsweise mit der erfindungsgemäßen, elektrischen Antriebseinheit ausgerüstet werden könne, seien genannt: rollerartige Kraftfahrzeuge, auf denen man steht; motorrollerartige Kraftfahrzeuge, auf denen man sitzt; Kleinfahrzeuge, insbesondere für Flughäfen und Golfplätze; Kraftfahrzeuge nach Art der millionenfach produzierten Personen-Kraftfahrzeuge, d.h. typischerweise mit ein bis sieben Sitzplätzen und überdacht; Kleinbusse und Omnibusse; Lastkraftwagen. Aus Gründen, die weiter unten noch deutlicher werden, ist die erfindungsgemäße, elektrische Antriebseinheit ganz besonders geeignet für Einsatzfälle, bei denen Hohe Antriebs-Drehmomente bzw. hohe Antriebs-Leistungen für das Kraftfahrzeug vorhanden sein sollen und für große/schwere Kraftfahrzeuge. Beispiele hierfür sind Lastkraftwagen und, allgemeiner, schwere Transportfahrzeuge. Als ganz besonders geeignet seien Kraftfahrzeuge erwähnt, bei denen mehr als ein oder zwei Kraftfahrzeugräder durch eine jeweilige elektrische Antriebseinheit angetrieben werden, z.B. große/schwere Transportfahrzeuge mit vier oder mehr angetriebenen Rädern. Obwohl die erfindungsgemäße, elektrische Antriebseinheit in erster Linie für den Einbau in nicht-schienengebundene Kraftfahrzeuge entwickelt worden ist, ist sie auch für Schienenfahrzeuge gut brauchbar.

Es gibt Kraftfahrzeug-Antriebsanwendungen, bei denen es vorteilhaft ist, wenn die Verlustwärme des Getriebes nicht unmittelbar von dem Getriebe an die Umgebungsluft abgegeben wird (wodurch das Getriebe zwangsläufig eine herausgehoben "heiße Stelle" des Kraftfahrzeugs ist und z.B. Verletzungsgefahr beim versehentlichen Berühren der Getriebewand besteht). Bei der Erfindung wird die Verlustwärme des Getriebes letztlich an anderer Stelle und über größere Fläche verteilt und normalerweise auf niedrigerem Temperaturniveau an die Umgebung abgegeben.

Bei elektrisch angetriebenen Kraftfahrzeugen stellt sich die Frage, wie das Kraftfahrzeug mit der erforderlichen elektrischen Energie versorgt werden kann. Man kennt insbesondere die folgenden Möglichkeiten: Speicher, aus dem elektrische Energie für die Antriebseinheit entnommen werden kann (z.B. Personenroller mit Akkumulator); Erzeugung elektrischer Energie an Bord des Fahrzeugs (z.B. Verbrennungsmotor mit Stromgenerator an Bord des Fahrzeugs; Brennstoffzellenstapel an Bord des Fahrzeugs); Übertragung elektrischer Energie von außen her in das Kraftfahrzeug (z.B. Omnibus mit Stromabnehmer von einer Oberleitung; Schienenfahrzeug mit Stromabnehmer von einer Oberleitung). Insbesondere für all diese Arten von Anbindung an elektrische Energie ist die erfindungsgemäße, elektrische Antriebseinheit geeignet.

Ein weiterer Gegenstand der Erfindung ist eine Radantriebseinheit für ein Kraftfahrzeug, die aufweist:
(a) eine elektrische Antriebseinheit, wie sie in der Anmeldung offenbart ist;
(b) und ein an dem Radträger der Antriebseinheit befestigtes Kraftfahrzeug-Rad.

Diese Radantriebseinheit ist eine Komponente, die als Einheit von dem Kraftfahrzeug demontierbar und an das Kraftfahrzeug montierbar ist. Außer der mechanischen Anbringung sind dann lediglich noch die elektrischen und kühlungsmäßigen Verbindungen, insbesondere durch ein Steckersystem, herzustellen.

Vorzugsweise ist die Antriebseinheit, gewünschtenfalls mit Ausnahme eines fahrzeugseitigen Teilbereichs des Achsstummel-Bauteils, vorzugsweise einschließlich einer etwaigen Bremsscheibe oder einer etwaigen Bremstrommel, im wesentlichen innerhalb der axialen Dimension des Kraftfahrzeug-Rads untergebracht. Oder in anderen Worten: Die so definierte Antriebseinheit ist in Axialrichtung im wesentlichen nicht breiter als das Kraftfahrzeug-Rad und ragt im wesentlichen an keiner der beiden Radseiten axial über das Rad hinaus.

Vorzugsweise weist die Radantriebseinheit mindestens einen Befestigungsbereich auf, an dem sie an einer Radaufhängung des Kraftfahrzeugs befestigbar ist. Dabei kann es sich um Anschlussstellen für lenkerartige Bauteile der Radaufhängung handeln, aber auch um Ausführung des Achsstummel-Bauteils als ein Bauteil nach Art eines Achsschenkels, so dass die gesamte Radantriebseinheit zum Lenken des Kraftfahrzeugs verschwenkt werden kann.

Noch ein weiterer Gegenstand der Erfindung ist ein Kraftfahrzeug, das mindestens eine Antriebseinheit, wie sie in der Anmeldung offenbart ist, oder mindestens eine Radantriebseinheit, wie sie in der Anmeldung offenbart ist, aufweist.

Bei dem mit der erfindungsgemäßen Antriebseinheit bzw. der kompletteren erfindungsgemäßen Radantriebseinheit ausgestatteten Kraftfahrzeug kann es sich um ein Kraftfahrzeug handeln, bei welchem nur die Räder einer Achse lenkbar sind. Es kann sich aber auch um ein Fahrzeug handeln, bei dem die Räder von zwei Achsen oder auch die Räder von noch mehr Achsen lenkbar sind. Es kann sich um ein Fahrzeug handeln, bei welchem die Räder aller Achsen lenkbar sind.

Die Erfindung und bevorzugte Ausgestaltungen der Erfindung werden nachfolgend anhand von zeichnerisch dargestellten Ausführungsbeispielen näher erläutert. Es zeigt:
- Fig. 1: eine erste Ausführungsform einer Radantriebseinheit bzw. einer elektrischen Antriebseinheit für Kraftfahrzeuge im axialen Längsschnitt, wobei nur eine obere Hälfte gezeichnet ist und die untere Hälfte spiegelbildlich gleich aussieht;
- Fig. 2: eine zweite Ausführungsform einer Radantriebseinheit bzw. einer elektrischen Antriebseinheit im axialen Längsschnitt, wobei nur eine obere Hälfte gezeichnet ist und die untere Hälfte spiegelbildlich gleich aussieht;

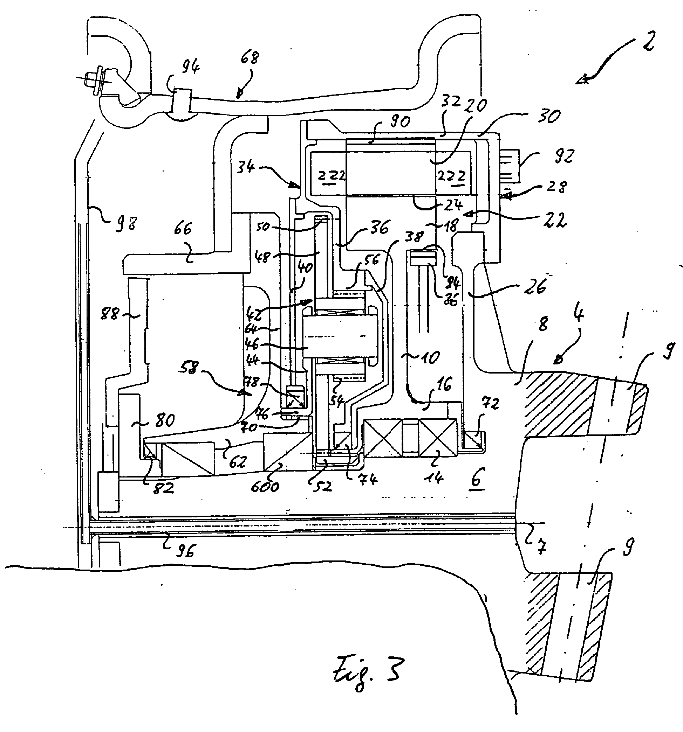

- Fig. 3: eine dritte Ausführungsform einer Radantriebseinheit bzw. einer elektrischen Antriebseinheit für Kraftfahrzeuge im axialen Längsschnitt, wobei nur eine obere Hälfte gezeichnet ist und die untere Hälfte spiegelbildlich gleich aussieht;
- Fig. 4: einen Kernbereich der Antriebseinheit von Fig. 3 in stärker schematisierter Weise, wobei einige Modifikationen eingezeichnet sind.

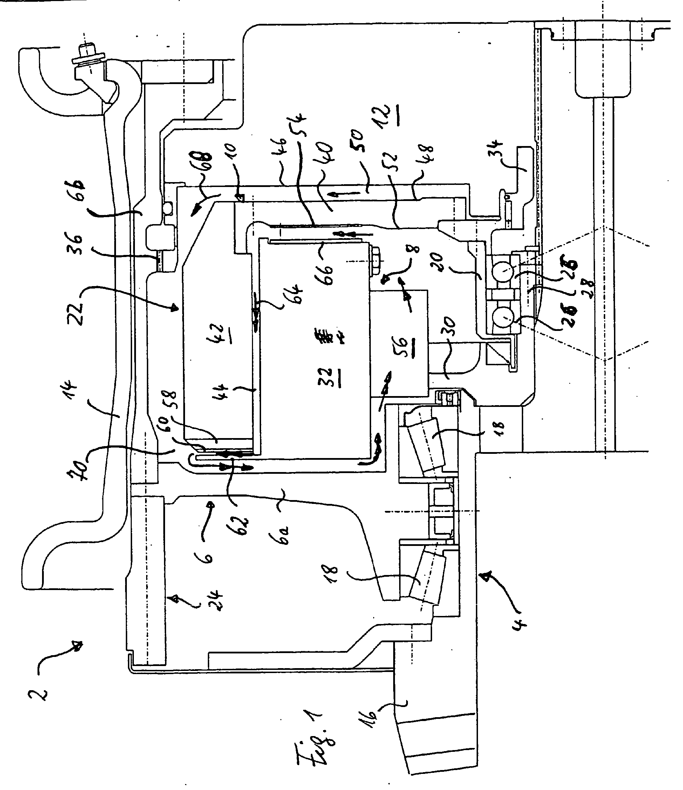

Die in Fig. 1 zeichnerisch dargestellte Radantriebseinheit 2 enthält folgende Hauptkomponenten:
- Achsstummel- Bauteil 4,
- Radträger 6,
- Stator 8 eines Elektromotors 22,
- Rotor 10 des Elektromotors 22,
- Getriebe 12 in Form eines Planetengetriebes,
- Radfelge 14,
- Reifen (nicht gezeichnet) auf der Radfelge 14,
- Bremseinrichtung 24.

Wenn man von der so beschriebenen Radantriebseinheit die Radfelge 14 mitsamt dem Reifen wegnimmt, hat man eine erfindungsgemäße Antriebseinheit mit den Hauptkomponenten Radträger 6, Elektromotor 22, Getriebe 12, ggf. Bremseinrichtung 24 vor sich. Links in Fig. 1 ist angedeutet, wie das Achsstummel-Bauteil 4 in einen Befestigungsbereich 16 (konkret gezeichnet eine obere von zwei Bohrungen) übergeht, an dem die Radantriebseinheit an einer Radaufhängung eines Fahrzeugs befestigbar ist.

Das Achsstummel-Bauteil 4, im folgenden kurz als Achsstummel 4 bezeichnet, hat in seinem in Fig. 1 linken Bereich einen größeren Durchmesser und in seinem in Fig. 1 rechten, axial längeren Bereich einen kleineren Durchmesser. Auf dem Bereich größeren Durchmessers ist der Radträger 6 mittels 2 Kegelrollenlagern 18 gelagert.

Der Radträger 6 ist insgesamt - grob gesprochen - becherförmig und besteht hauptsächlich aus einem - grob gesprochen - scheibenförmigen ersten Teil 6a und einen im wesentlichen zylindrischen Teil 6b. Die Radfelge 14 ist an dem zylindrischen Teil 6b befestigt (nicht explizit gezeichnet).

Der Rotor 10 des Elektromotors 22 ist becherförmig, wobei der Becher nach links in Fig. 1 offen ist und wobei im zentralen Bereich ein hülsenförmiger Ansatz 20, der nach links in Fig. 1 ragt, angeschraubt ist. Zwei axial beabstandete Kugellager 26 lagern den Rotor 10 auf dem Achsstummel 4 und zwar unter Zwischenschaltung eines hülsenartigen, nach rechts in Fig. 1 ragenden Fortsatzes 28 des Stators 8.

Der Stator 8 ist radial weiter innen scheibenförmig (siehe Bezugszeichen 30) ausgebildet und geht dann, radial noch weiter innen, in den bereits angesprochenen Fortsatz 28 über. Radial weiter außen ist der Stator 8 in Axialrichtung wesentlich verbreitert und weist dort seinen für die Motorfunktion aktiven Bereich 32 auf, d.h. im wesentlichen seine in Umfangsrichtung verteilten Statorpole und seine nicht explizit zeichnerisch dargestellte Bewicklung.

Das Getriebe 12 ist ein Planetengetriebe mit grundsätzlich bekanntem Aufbau, so dass der Aufbau des Getriebes 12 nicht im einzelnen beschrieben werden muss. Der Vollständigkeit halber sei jedoch angesprochen, dass das Getriebe 12 ein drehend antreibbares Sonnenrad, einen für Rotation gelagerten Planetenträger, mehrere umfangsmäßig verteilt angeordnete und in dem Planetenträger für eigene Drehung gelagerte Stufenplanetenräder (mit erster Verzahnung auf größerem Durchmesser und zweiter Verzahnung auf kleinerem Durchmesser) und ein innenverzahntes Hohlrad aufweist, welches nicht-drehend auf dem Achsstummel 4 festgelegt ist. Das Sonnenrad kämmt mit der ersten Verzahnung des jeweiligen Planetenrads. Die zweiten Verzahnungen der Planetenräder kämmen mit dem Hohlrad. Der rotierende Planetenträger ist der Getriebeausgang des Getriebes 12. Schematisch eingezeichnet in Fig. 1 ist ein Drehmomentübertragungsring 34, der einerseits mit dem Rotor 10 drehmomentübertragend gekoppelt ist und andererseits in seinem in Fig. 1 rechten Endbereich mit dem drehfest aufgesetzten, nicht gezeichneten Sonnenrad versehen ist. Der Getriebeausgang des Getriebes 12 ist über eine drehmomentübertragende Verbindung 36 mit dem zylindrischen Teil 6b des Radträgers 6 gekoppelt.

Der Rotor 10 des Elektromotors 22 besteht im wesentlichen aus einem sich im wesentlichen radial erstreckenden Rotorboden 40, radial weiter innen dem bereits angesprochenen Fortsatz 20 für die Lagerung des Rotors 10 und radial außen einen für die Motorfunktion aktiven Bereich 42, der im wesentlichen in Umfangsrichtung verläuft und eine axiale Ausdehnung passend zu der axialen Ausdehnung des aktiven Statorbereichs 32 hat. Zwischen dem aktiven Statorbereich 32 und dem aktiven Rotorbereich 42 befindet sich ein im wesentlichen zylindrischer Luftspalt 44 des Elektromotors 22. Vorzugsweise ist der Elektromotor 22 von demjenigen Typ mit bewickelten Statorpolen am aktiven Bereich 32 und Dauermagneten am Innenumfang des aktiven Bereichs 42 und mit elektronisch gesteuerter Stromzufuhr zu den Statorpolbewicklungen.

Zwischen der in Fig. 1 nach links weisenden Begrenzung 46 des Getriebes 12 und der in Fig. 1 nach rechts weisenden Begrenzung 48 des Rotorbodens 40 befindet sich ein Luftspalt 50. Quer über den Luftspalt 50 hinweg kann Wärme von dem Getriebe 12 zu dem Rotorboden 40 übertragen werden, selbstverständlich nur wenn ein Temperaturgefälle in dieser Richtung besteht. Es wird betont, dass sich der Rotorboden 40 mit mehrfach höherer Drehzahl dreht als der Getriebeausgang des Getriebes 12. Bei dem gezeichneten Ausführungsbeispiel ist die Fläche 46 Bestandteil des sich drehenden Planetenträgers des Getriebes 12.

An dem in Fig. 1 nach links weisenden Oberflächenbereich 52 des Rotorbodens 40 ist eine sehr dünne Trägerplatte 54 eines Resolvers befestigt.

Radial innen an dem für die Motorfunktion aktiven Bereich 32 des Stators 8 ist ein Luft/Flüssigkeit-Wärmetauscher 56 angebracht. Der Wärmetauscher 56 steht über zwei nicht eingezeichnete Leitungen, die letztlich durch den Achsstummel 4 nach links verlaufen, in Flüssigkeitsströmungsverbindung mit einem Flüssigkeit/Luft-Wärmetauscher am Fahrzeug, der großflächig Wärme an die Umgebungsluft abgibt. Man muss sich vorstellen, dass der scheibenartige Bereich 30 des Stators 8 dort eine Öffnung hat, wo der Wärmetauscher 56 angebracht ist.

An der in Fig. 1 linken Stirnseite 58 des Rotors 10 sind wie Schaufeln wirkende Strömungsleitelemente 60 vorgesehen. Außerdem ist gegenüberliegend der Stirnseite 58 des Rotors 10 eine Verlängerung 62 des Stators 8 radial nach außen vorgesehen, so dass zwischen der Stirnseite 58 und der Verlängerung 62 mittels der Strömungsleitelemente 60 ein wie ein Gebläse wirkender Bestandteil des Elektromotors 22 gebildet ist. Mit Pfeilen 64, die zwei Spitzen tragen, ist ein Luftstrom bezeichnet, der im Inneren des Elektromotors 22 zirkuliert. Rechts unten beginnend geht der Luftstrom zunächst mit Radialkomponente nach außen durch den Raum zwischen der nach links weisenden Oberfläche 52 des Rotorbodens 40 und der nach rechts weisenden Stirnseite 66 des Statorbereichs 32, dann mit Axialkomponente durch den Luftspalt 44, dann mit Radialkomponente nach aussendurch den Raum zwischen der linken Stirnseite 58 des Rotors 10 und der Gegenfläche 62, dann mit Radialkomponente nach innen, und schließlich mit Axialkomponente durch den Wärmetauscher 56, um dort wieder auf eine für seine Kühlungsfunktion gebotene, niedrigere Temperatur zurückgekühlt zu werden.

Mit Pfeilen 68 mit nur einer Spitze ist eine Luftverwirbelungsbewegung in dem Luftspalt 50 angedeutet. Der Luftspalt 50 ist schmal für möglichst guten Wärmeübergang. Die in Fig. 1 nach rechts weisende Oberfläche 48 des Rotorbodens 40 ist vorzugsweise mit nicht eingezeichneten Turbolenzerzeugern versehen. So wird die Luft in dem Luftspalt 50 in gewisser Bewegung gehalten, und es gibt genügend Luftaustausch in dem mit 32 bezeichneten Bereich mit dem eigentlichen Luftstrom 64.

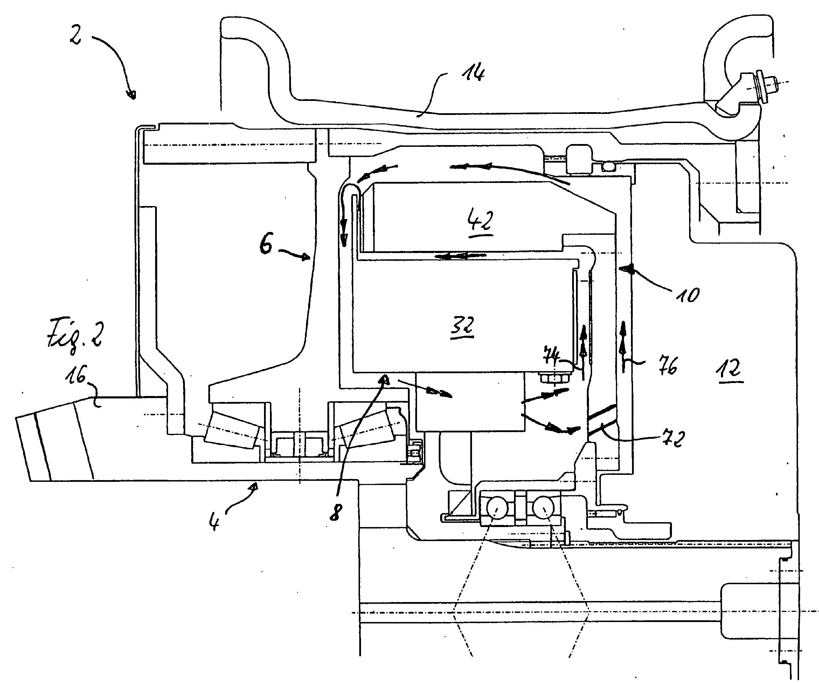

Die Radantriebseinheit bzw. elektrische Antriebseinheit 2 gemäß Fig. 2 unterscheidet sich nur in Folgendem von der Radantriebseinheit bzw. elektrischen Antriebseinheit von Fig. 1.

An einer Stelle, die relativ weit radial innen liegt, aber immer noch ein Stück radial weiter außen als der Fortsatz 20 liegt, sind Öffnungen 72 vorgesehen, die sich leicht schräg (rechts in Fig. 2 etwas weiter radial außen) durch den Rotorboden 40 erstrecken. Über den Umfang des Rotorbodens 40 verteilt sind mehrere dieser Öffnungen 72 vorgesehen. Auf seiner in Fig. 2 nach rechts weisenden Oberfläche 48 ist der Rotorboden 40 mit wie Schaufeln wirkenden, nicht eingezeichneten Strömungsleitelementen versehen. Aufgrund der geschilderten Ausbildung gibt es, im Bereich des Rotorbodens 40, einen ersten Teil-Luftstrom 74 zwischen dem Rotorboden 40 und dem Statorbereich 32 sowie einen zweiten Teil-Luftstrom 76 zwischen dem Rotorboden 40 und der Getriebbegrenzung 46. Die beiden Teil-Luftströme vereinigen sich weiter strömungsabwärts. Auf diese Weise wird der Luftspalt 50 intensiver gekühlt als bei dem Ausführungsbeispiel gemäß Fig. 1.

Bei Betrachtung von Fig. 1 und Fig. 2 ist leicht vorstellbar, dass das Getriebe 12 als Modul von der Radantriebseinheit 2 in Axialrichtung abgezogen werden kann, wobei der zylindrische Bereich 6b des Radträgers 6 mit abgezogen wird und das Sonnenrad des Getriebes 12 von dem Drehmomentübertragungsring 34 abgezogen wird. Ferner kann man den Rotor nach Lösen der eingezeichneten Schraubverbindung zu seinem Zentralbereich ebenfalls in Axialrichtung von der Antriebseinheit demontieren. Auch der Stator 8 ist axial nach rechts demontierbar. Ein nicht eingezeichnetes Steckersystem zur elektrischen und kühlungsmäßigen Anbindung des Elektromotors 22 an das Innere des Fahrzeugs kann man sich als in den im linken Bereich hohlen Achsstummel 4 von links her eingesteckt vorstellen. Die Elektronik zur gesteuerten Stromversorgung des Elektromotors 22 ist im Inneren des Kraftfahrzeugs untergebracht. Die Elektronik ist so ausgebildet, dass der Elektromotor 22 auf Bremsfunktion umschaltbar ist.

Die im Normalzustand drehmomentübertragende Verbindung zwischen dem Rotor 10 und dem Drehmomentübertragungsring 34 kann durch Fernbetätigung (z.B. axiale Verschiebung eines Kopplungselements aus einem Vielnutprofil heraus) aufgehoben werden, so dass die Felge 14 gedreht werden kann ohne den Rotor 10 mit zu drehen. Dann kann das Fahrzeug abgeschleppt werden, ohne dass sich der Elektromotor erwärmt.

### Dritte Ausführungsform:

Die gesamte Antriebseinheit 2 wird von einem Achsstummel-Bauteil 4 getragen, welche einstückig den kräftigen, zylindrischen, eigentlichen Achsstummel 6 und eine Basis 8 mit zwei Bohrungen 9 aufweist. Mittels der Basis 8 lässt sich die gesamte Antriebseinheit 2 an einem nicht gezeichneten Fahrzeug befestigen. Durch Schwenken um die gemeinsame Achse der genannten Bohrungen 9 lässt sich das mit der Antriebseinheit 2 ausgestattete Rad des Fahrzeugs lenken.

Mehr rechts ist auf dem Achsstummel 6 ein Rotor 10 eines Elektromotors 22 mit zwei Wälzlagern 14 gelagert. Der Rotor 10 hat - grob gesprochen - die Gestalt einer Scheibe mit zentraler Öffnung. Um diese zentrale Öffnung herum ist Rotor 10 in Axialrichtung zur Ausbildung einer Nabe 16 vergrößert. In seinem radial äußeren Bereich 18 ist der Rotor 10 ebenfalls axial vergrößert. In dem radial äußeren Bereich 18 sind nach radial außen vorragende Rotorpole ausgebildet, die durch axial verlaufende Nuten voneinander separiert sind und durch einen gemeinsamen Rücken radial innen miteinander verbunden sind.

Der radial äußere Bereich 18 ist geblecht ausgeführt, d.h. er besteht aus einer gestapelten Anzahl von Blechen, die jeweils in einer Radialebene quer zur Zentralachse 20 der Antriebseinheit 2 liegen und elektrisch voneinander isoliert sind.

Der Rotor 10 ist Bestandteil des Reluktanz-Elektromotors 22. Der Elektromotor 22 weist radial außerhalb des Rotors 10 einen Stator 20 auf, der analog wie der Rotor 10 geblecht ist. Auch der Stator 20 weist ausgeprägte Pole mit Nuten zwischen den Polen und radial außen einem verbindenden Statorrücken auf. Die Statorpole sind mit Spulen bewickelt, wobei man in der Zeichnung die sog. Wickelköpfe 22 erkennt, die dadurch entstehen, dass die Wicklungsdrähte an dem dortigen Axialende aus einer Nut austreten und umbiegend in eine andere Nut hineingeführt sind. Die Wickelköpfe 22 gehen an jedem Axialende um eine Dimension a in Axialrichtung über das Statoreisen hinaus. Zwischen dem Innenumfang des Stators 20 und dem Außenumfang des Rotors 10 befindet sich ein Luftspalt 24.

Ein Motorgehäuse 28 besteht im wesentlichen aus den folgenden Bestandteilen: Das Achsstummel-Bauteil 4 ist in dem Bereich zwischen dem Rotor 10 und den Bohrungen 9 zu einem scheibenartigen Bereich 26 erheblich vergrößerten Durchmessers ausgeführt, der einen Großteil der dortigen Stirnwand des Motorgehäuses 28 bildet. Ein zweiter Teil des Motorgehäuses 28 wird durch ein napfartiges Bauteil 30, welches eine große Zentralöffnung hat, gebildet. Der zentral offene Boden des Bauteils 30 wird im zusammengebauten Zustand durch den scheibenartigen Bereich 26 geschlossen; der Restbereich des Bodens bildet einen ringförmigen, äußeren Teil der dortigen Stirnwand des Motorgehäuses 28. Die Umfangswand des napfförmigen Bauteils 30 bildet die Umfangswand 32 des Motorgehäuses 28.

In der Zeichnungsfigur links schließt sich an die ganz offene Seite des napfförmigen Bauteils 30 ein Getriebegehäuse 34 an. Das Getriebegehäuse 34 besteht im wesentlichen aus drei Bauteilen: (1) Einem Hauptteil 36, welches von dem Anschluss an das napfförmige Bauteil 30 des Motorgehäuses 28 radial nach innen führt und dabei an zwei Stellen nach rechts abgekröpft ist. (2) Einem rechten, deckelartigen Bauteil 38, welches weiter nach radial innen geführt ist bis zu einer zentralen Öffnung des Getriebegehäuses 34. (3) Einem linken, deckelartigen Bauteil 40, welches auf der linken Seite eines Planetengetriebes 42 nach radial innen bis zu einer zentralen Öffnung geführt ist.

Der Hauptbestandteil 36 des Getriebegehäuses 34 schließt in seinem radial äußeren Bereich den Elektromotor 22, konkret dessen Stator 20, nach links hin ab. Radial innerhalb des in der Zeichnungsfigur linken Wickelkopfes 22 biegt der Hauptteil 36 nach rechts hin ab, um dann kurz vor dem radial äußeren Bereich 18 des Rotors 10 wieder in radialen Verlauf überzugehen. Radial innerhalb des Bereichs 18 des Rotors 10 verbreitert sich der Hauptteil 36 in Axialrichtung nach rechts. Dort schließt sich das rechte, deckelartige Bauteil 38 an, welches das Getriebegehäuse auf der rechten Seite des Planetengetriebes 42 fortsetzt. Das linke, deckelartige Bauteil 40 schließt das Planetengetriebe 42 auf seiner linken Seite ab.

Das Hauptteil 36 und das rechte, deckelartige Bauteil 38 sind somit einerseits Bestandteile des Getriebegehäuses 34, andererseits schließen sie aber auch den Innenraum des Elektromotors 22 auf seiner linken Seite ab.

Im Inneren des Planetengetriebes 42 befindet sich ein Planetenträger 44, der über den Umfang verteilt mehrere, axial verlaufende Bolzen 46 trägt. Auf jedem Bolzen ist ein Stufenplanetenrad 48 drehbar gelagert. Der durchmessergrößere Teilbereich jedes Stufenplanetenrads 48 ist an seinem Außenumfang mit einer Verzahnung 50 versehen. Die Verzahnung 50 kämmt mit einem weiter unten noch genauer zu beschreibenden Sonnenrad 52. Der durchmesserkleinere Bereich jedes Stufenplanetenrads 48, der axial rechts neben dem durchmessergrößeren Bereich liegt, ist an seinem Außenumfang mit einer Verzahnung 54 versehen. Die Verzahnung 54 kämmt mit einem innenverzahnten, feststehenden Hohlrad 56, welches entweder einstückig in dem Hauptteil 36 des Getriebegehäuses 34 ausgearbeitet ist oder als gesondertes Teil dort eingesetzt ist.

Das bereits angesprochene Sonnenrad 52 ist ein - grob gesprochen - hohlzylindrisches Bauteil, das innen von dem Achsstummel 6 durchsetzt wird.

Auf einer rechten Teillänge ist das Sonnenrad in eine Zentralbohrung des Nabenbereichs 16 des Rotors eingeschoben und dort drehfest mit dem Rotor 10 verbunden. In einem linken Teilbereich der Länge ist das Sonnenrad mit einer Außenverzahnung 52 versehen und kämmt, wie bereits angesprochen, mit allen umfangsmäßig verteilten Stufenplanetenrädern 48.

Durch die beschriebenen Bauteile Sonnenrad 52, Stufenplanetenräder 48, feststehendes Hohlrad 56, rotierbarer Planetenträger 44 ist das Planetengetriebe 42 gebildet. Man sieht, dass die Zähne 50 der Planetenräder 48, mit denen sie mit dem Sonnenrad 52 in Eingriff sind, weniger weit nach links in der Zeichnungsfigur reichen, als die linken Wickelköpfe 22 des Stators 20 des Elektromotors 22. Die Zähne 50 befinden sich axial neben dem radial äußeren Bereich 18, der den an den Luftspalt 24 anschließenden Bereich des Rotors 10 darstellt. Diejenigen Zähne 50, die sich in der Zeichnungsfigur ganz oben befinden, befinden sich in einem radialen Abstand von der Zentralachse 7, der kleiner als der Radius des Luftspalts 24, aber größer als der Radius beim Übergang vom radial äußeren Bereich 18 des Rotors 10 in den scheibenartigen Bereich des Rotors 10 ist.

Man kann sich auch eine zylindrische Hüllfläche vorstellen, welche alle größten Durchmesser aller Planetenräder 40 außen umschließt, also jede einzelne Verzahnung 50 eines einzelnen Planetenrads 48 nur für ein kurzes umfangsmäßiges Stück berührt. Dieser Hüllfläche kann man einen Durchmesser bzw. einen Radius zuschreiben und eine axiale Breite, welche der axialen Breite der Verzahnung 50 entspricht. Diese gedachte Hüllfläche liegt gleichsam innerhalb des Winkelraums, welcher axial rechts durch den radial äußeren Bereich 18 bzw. die zwischengesetzte Wand des Gehäusehauptteils 36 begrenzt wird und der radial außen durch den Innenumfang der Gesamtheit der linken Wickelköpfe 22 bzw. den dort zwischengesetzten Bereich des Gehäusehauptteils 36 begrenzt ist. Ohne den Bereich der Erfindung zu verlassen, kann die Ausbildung des Planetengetriebes 42 auch so sein, dass die Planetenräder 48 ein Stück weiter nach links reichen, also die Verzahnungen 50 mit ihren linken Endbereichen weiter nach links ragen als die linken Wickelköpfe 22.

Links von den Planetenrädern 48 ist auf dem Achsstummel 6 ein Radträger 58 gelagert, und zwar mittels zweier beabstandeter Wälzlager 60. Der Radträger 58 besteht aus einem Nabenbereich 62 und einem scheibenartigen Bereich 64. An dem scheibenartigen Bereich 64 sind eine Bremstrommel 66 und eine Reifenfelge 68 befestigt. Ein bei betriebsfertiger Antriebseinheit 2 auf der Felge 68 befindlicher Reifen ist nicht eingezeichnet.

Rechts hat der Nabenbereich 62 des Radträgers 58 einen Bereich, der über den scheibenartigen Bereich 64 vorragt und an seinem Außenumfang mit einem axial verlaufenden Vielnutprofil 70 versehen ist. Der Planetenträger 44 besitzt in seiner Innenbohrung ein komplementäres Vielnutprofil und ist mit diesem auf das Vielnutprofil 70 des Radträgers 58 aufgeschoben. Dies schafft eine drehmomentübertragende Verbindung zwischen dem Planetenträger 44 und dem Radträger 58.

Im rechten Endbereich des Nabenbereichs 16 des Rotors 10 ist ein Simmerring 72 positioniert, der den Innenraum des Motorgehäuses 28 gegenüber der Lagerung des Rotors 10 abdichtet. Im linken Endbereich des Nabenbereichs 16 des Rotors 10 ist ein Simmerring 74 positioniert, der den Innenraum des Elektromotors 22 gegenüber dem Innenraum des Planetengetriebes 42 abdichtet. Der Simmerring 72 befindet sich zwischen dem Nabenbereich 16 des Rotors 10 und dem Achsstummel-Bauteil 4. Der Simmerring 74 befindet sich zwischen dem Nabenbereich 16 des Rotors 10 und der Innenbohrung des rechten Dekkelteils 38. Zwischen der Innenbohrung des linken Deckelteils 40 und dem Außenumfang eines nach links ragenden, axialen Fortsatzes 76 des Planetenträgers 44 befindet sich ein Simmerring 78, der das Innere des Planetengetriebes 42 gegenüber der äußeren Umgebung abdichtet. Zwischen dem Nabenbereich 58 und einem auf dem linken Endbereich des Achsstummels 6 drehfest befestigten Bauteil 80 befindet sich ein Simmerring 82, der den Lagerraum des Radträgers 58 gegenüber der äußeren Umgebung abdichtet. Der mit dem Planetenträger 44 zusammenwirkende Simmerring 78 befindet sich an einer Stelle, die radial größer ist als das rechte Lager des Radträgers 58, aber über dieses Lager 60 weder nach axial links noch nach axial rechts hinausgeht.

Ferner ist zu sehen, dass der Innenumfang des radial äußeren Bereichs 18 des Rotors 10 dort, wo er sich rechts von dem scheibenartigen Bereich des Rotors 10 befindet, als Bremstrommel 84 ausgebildet ist. Zusammen mit Bremsbacken 86 wird dort eine Not- und Feststellbremse für das Fahrzeug gebildet. Ein Seilzug oder auch eine Hydraulikleitung zur Betätigung der Trommelbremse 84, 86 kann bequem durch den scheibenförmig vergrößerten Bereich 26 des Achsstummel-Bauteils 4 geführt werden.

Am linken Ende des Achsstummels 6 ist drehfest das schon weiter oben angesprochene Bauteil 80 befestigt. An dem Bauteil 80 ist ein Bremsträger 88 befestigt. An dem Bremsträger 88 sind die nicht rotierenden Bestandteile einer nicht eingezeichneten Betriebsbremse der Antriebseinheit 2 befestigt. Die Bremsbacken dieser Betriebsbremse wirken von innen her gegen den Innenumfang der rotierenden Bremstrommel 66. Durch Abbau des Bremsträgers 88 nach links ist die Betriebsbremse für Bremsbelagwechsel offen.

Das napfförmige Bauteil 30 kann man nach Lösen von Verbindungsschrauben mit dem scheibenförmig vergrößerten Bereich 26 und nach Lösen von Verbindungsschrauben mit dem Hauptteil 36 des Getriebegehäuses 34 axial nach rechts von der Antriebseinheit 2 wegnehmen. Dabei wird der Stator 20 mit demontiert. Der scheibenförmige Bereich 26 hat einen Außendurchmesser, der so klein ist, dass man auch einen radial äußeren Bereich des Rotors 10 axial nach rechts hin demontieren kann.

Radial außen am Stator 20 ist ein axial verlaufendes Metallröhrchen 90 in übertriebener Größe eingezeichnet. Das Röhrchen 90 sitzt in einer äußeren, axial verlaufenden Nut am Außenumfang des Stators 20 und reicht in eine innere, in Axialrichtung verlaufende Nut des Umfangsbereichs 32 des Motorgehäuses 28. Über den Umfang des Stators 20 verteilt sind eine Vielzahl derartiger Röhrchen 90 positioniert. Sie sind alle z.B. mit ihrem linken Ende an eine Kühlmittelzuführung und ihrem rechten Ende an eine Kühlmittelabführung angeschlossen.

Mittel für eine Luftumwälzung innerhalb des Motorgehäuses 28 sind nicht eingezeichnet. Möglich sind z.B. ventilatorflügelartige Fortsätze an geeigneter Stelle des Rotors 10.

An der rechten Stirnwand des Motorgehäuses 28 erkennt man ein Steckanschlußelement 92, wo mit einem oder mehreren Steckverbindern elektrische Verbindungen zwischen dem Stator 20 und dem rechts von der Zeichnungsfigur befindlichen Karosseriekörper des Fahrzeugs sowie Kühlmittelverbindungen zwischen dem Stator 20 und dem Karosseriekörper des Fahrzeugs hergestellt werden können. Außerdem ist schematisiert ein Reifendruckregelventil 94 in der Felge 68 eingezeichnet. Eine Druckluftleitung 96 läuft durch eine Zentralbohrung des Achsstummel-Bauteils 4 und dann ab einer rotierbaren Verbindung durch ein radkappenartiges Bauteil 98 zu dem Reifendruckregelventil 94. Durch die Zentralbohrung des Achsstummel-Bauteils 4 ist auch der elektrische oder hydraulische oder pneumatische Anschluß der Bremsanlage an dem Bremsträger 88 hergestellt.

Das Ausführungbeispiel hat vor Augen geführt, dass die Erfindung eine äußerst günstige Art der Lagerung von Rotor 10 und Radträger 58 erlaubt. Der Rotor 10 und der Radträger 58 sind jeweils beidseitig von der Ebene gelagert, in der die radiale Kraft angreift.

Günstige Trennstellen von Drehmomentübertragungsverbindungen sind bei dem Ausführungsbeispiel die Vielnutverbindung zwischen dem Rotor 10 und dem Sonnenrad 52 und die Vielnutverbindung zwischen dem Planetenträger 44 und dem Radträger 58.

Es wird ausdrücklich betont, dass eine Flüssigkeitskühlung des Stators eines Elektromotors mittels Röhrchen, vorzugsweise aus Metall, die sich im Bereich des Statorrücken-Umfangs entfernt von dem Luftspalt des Elektromotors befinden (wie bei dem Ausführungsbeispiel in einer bevorzugten Ausführungsform abgehandelt), auch für sich erfinderische Bedeutung hat, also losgelöst von der sonstigen Ausbildung der Antriebseinheit und den sonstigen, in der Anmeldung offenbarten Merkmalen. Andererseits weist diese Flüssigkeitskühlung vorzugsweise eines oder mehrere der weiteren, in der Anmeldung offenbarten Merkmale auf.

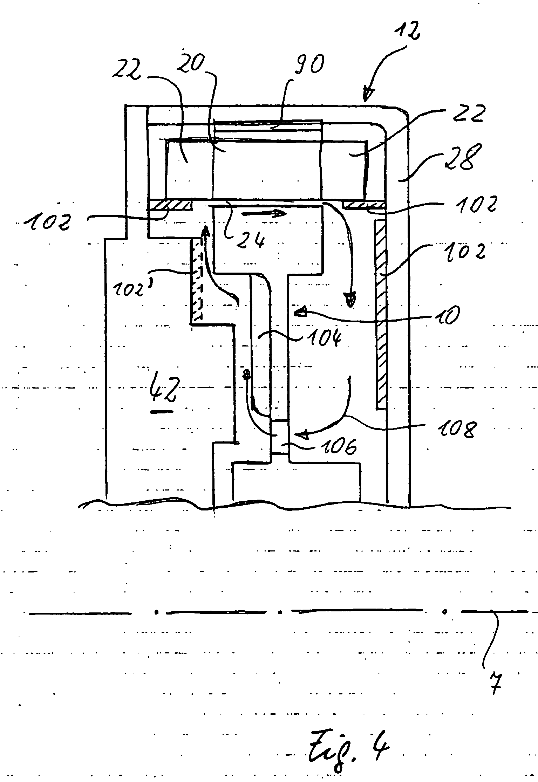

In Fig. 4 ist veranschaulicht, wie man bei der Antriebseinheit 2 Wärme abführende Metallelemente 102 vorsehen kann. Eine erste eingezeichnete Möglichkeit ist radial innen benachbart den Wickelköpfen 22, links und rechts. Diese Metallelemente 102 haben die Form von Hohlzylindern. Eine zweite Möglichkeit ist die Anbringung innen an der in Fig. 4 rechten Stirnseite des Motorgehäuses 28; in diesem Fall hat das Metallelement 102 die Gestalt eines ebenen Kreisrings. Normalerweise verwirklicht man entweder die erste Möglichkeit oder die zweite Möglichkeit, aber man kann auch beide gemeinsam verwirklichen.

Als dritte Möglichkeit ist die Anbringung an der Trennwand 36 zwischen dem Elektromotor 22 und dem Getriebe 42 in unterbrochenen Linien eingezeichnet. Dieses Metallelement 102' führt am unmittelbarsten Wärme aus dem Getriebe 42 ab.

Die Metallelemente 102 und 102' bestehen vorzugsweise aus Kupfer oder Aluminium, um die Wirbelstromverluste möglichst klein zu halten.

Die Metallelemente 102 sind vorzugsweise, z. B. mittels geeigneter, nicht eingezeichneter Röhrchen, mit dem Flüssigkeits-Kühlungssystem verbunden, an welches auch die Röhrchen 90 angeschlossen sind. Alternativ ist es möglich, mit metallischer Wärmeleitung von den Metallelementen 102 durch das Motorgehäuse 28 zu den Röhrchen 90 zu arbeiten. Das Metallelement 102' kann ebenfalls mit Röhrchen an das Flüssigkeits-Kühlsystem angebunden sein.

Im in Fig. 4 gezeichneten Fall ist der Rotor mit Schaufeln 104 und mit Öffnungen 106 versehen, die sich zwischen der in Fig. 4 linken Rotorseite und der in Fig. 4 rechten Rotorseite erstrecken. Es sind mehrere Öffnungen 106 über den Umfang des Rotors 10 verteilt vorgesehen. Die Öffnungen 106 befinden sich radial ziemlich weit innen, und zwar knapp außerhalb der Nabe 16. Durch die beschriebene Ausführung wird erreicht, dass im Inneren des Elektromotors 22 bei Rotation des Rotors 10 ein zirkulierender Luftstrom 108, wie mit Pfeilen angedeutet, erzeugt wird. Der Luftstrom 108 geht auf der linken Rotorseite von den Öffnungen 106 unter der Wirkung der Schaufeln 104 radial nach außen, dann durch den Luftspalt 24 des Elektromotors 10 hinüber auf die rechte Rotorseite, und dort radial nach innen zurück zu den Öffnungen 106.

Man kann auch ohne die Öffnungen 106 arbeiten. Dann gibt es sowohl links von dem Rotor 10 als auch rechts von dem Rotor 10 jeweils einen zirkulierenden Luftstrom, der dicht am Rotor 10 radial nach außen geht und weiter entfernt vom Rotor 10 wieder radial nach innen geht.

Man kann auch ohne Schaufeln 104 arbeiten. Der Rotor 10 nimmt die in seiner Nähe befindliche Luft in Umfangsrichtung mit. Dadurch entstehen in der Luft Zentrifugalkräfte, welche eine Luftbewegung nach radial außen bewirken.

Wärme abführende Metallelemente wie die in Fig. 4 gezeichneten Metallelemente 102 können auch bei den Ausführungsformen der Erfindung mit Außenrotor (siehe z. B. Ausführungsformen gemäß Fig. 1 und gemäß Fig. 2) vorgesehen werden. Bei der Ausführungsform gemäß Fig. 4 kann statt der Metallelemente 102 oder zusätzlich zu diesen ein Luft/Flüssigkeit-Wärmetauscher z. B. analog dem Wärmetauscher 56 bei Ausführungsform gemäß Fig. 1 vorgesehen sein.

Für alle Ausführungsformen gilt, dass der Luft/Flüssigkeit-Wärmetauscher 56 am günstigsten in das sonstige Flüssigkeit-Kühlsystem, welches den Stator 20 kühlt, eingebunden ist.

## Patentansprüche

1. Elektrische Antriebseinheit (2) für ein Kraftfahrzeug, die aufweist:
(a) einen Elektromotor (22) mit einem stationären Stator (8) und einem rotierbar gelagerten Rotor (10);
(b) ein Planetengetriebe (12) mit einem rotierbaren Eingang, der für Drehmomentübertragung mit dem Rotor (10) des Elektromotors (22) in Verbindung steht, und einem rotierbaren Ausgang;
(c) eine Trennwand (46) zwischen dem Innenraum des Elektromotors (22) und dem Innenraum des Planetengetriebes (12);
(d) einen rotierbaren Radträger (6), der für Drehmomentübertragung mit dem Ausgang des Planetengetriebes (12) in Verbindung steht;
(e) ein Achsstummel-Bauteil (4), welches den Elektromotor (22), das Planetengetriebe (12) und den Radträger (6) trägt, wobei das Achsstummel-Bauteil (4) einen Befestigungsbereich (16) zur Befestigung der Antriebseinheit (2) an dem Kraftfahrzeug und einen nicht-rotierenden Achsstummel-Bereich aufweist, der sich von dem Befestigungsbereich (16) in den Elektromotor (22), in das Planetengetriebe (12) und in den Radträger (6) erstreckt und ein Lagerungsbauteil für den Rotor (10) des Elektromotors (22), den Eingang des Planetengetriebes (12), den Ausgang des Planetengetriebes (12) und den Radträger (6) bildet;
(f) eine Flüssigkeitskühlung zur Kühlung des Stators (8) des Elektromotors (22);
(g) eine Luftkühlung zur Kühlung des Rotors (10) des Elektromotors (22), die mit im Inneren des Elektromotors (22) bleibendem, zirkulierenden Luftstrom arbeitet;
(h) und eine Wärmesenke im Elektromotor (22) zur Wärmeaufnahme aus dem zirkulierenden Luftstrom, die als Luft/Flüssigkeit-Wärmetauscher (56) oder als flüssigkeitsgekühltes Metallelement (102) ausgebildet ist.

2. Antriebseinheit (2) nach Anspruch 1,
**dadurch gekennzeichnet, dass** die Luftkühlung so ausgelegt ist, dass mindestens ein Teil des zirkulierenden Lufrstroms an der Trennwand (46) entlangströmt, so dass ein wesentlicher Teil der Verlustwärme des Planeten-Getriebes (12) an den zirkulierenden Luftstrom übergeht.

3. Antriebseinheit (2) nach Anspruch 1 oder 2,
**dadurch gekennzeichnet, dass** der Elektromotor (22) einen Außenrotor aufweist.

4. Antriebseinheit (2) nach Anspruch 1 oder 2,
**dadurch gekennzeichnet, dass** der Elektromotor (22) einen Innenrotor aufweist.

5. Antriebseinheit (2) nach einem der Ansprüche 1 bis 4,
**dadurch gekennzeichnet, dass** der Rotor (10) und/oder eine dem Elektromotor (22) zugewandte Oberfläche der Trennwand (46) mit Oberflächenrauhigkeit ausgeführt ist (sind).

6. Antriebseinheit (2) nach einem der Ansprüche 1 bis 5,
**dadurch gekennzeichnet, dass** der Rotor (10) und/oder eine dem Elektromotor (22) zugewandte Oberfläche der Trennwand (46) mit Turbulenzerzeugern ausgeführt sind.

7. Antriebseinheit (2) nach einem der Ansprüche 1 bis 6,
**dadurch gekennzeichnet, dass** der Rotor (10) wie Schaufeln wirkende Strömungsleitflächen (60, 104) aufweist, um eine Luftstromung mit Radialkomponente zu erzeugen.

8. Antriebseinheit (2) nach einem der Ansprüche 1 bis 7,
**dadurch gekennzeichnet, dass** der Rotor (10) Öffnungen (72, 106) aufweist, welche sich zwischen der dem Planeten-Getriebe (12) näheren Rotorseite und der dem Planeten-Getriebe (12) ferneren Rotorseite erstrecken.

9. Antriebseinheit (2) nach einem der Ansprüche 1 bis 8,
**dadurch gekennzeichnet, dass** an dem Radträger (6) eine Reifenfelge (14) befestigt ist.

10. Kraftfahrzeug, das mindestens eine elektrische Antriebseinheit (2) gemäß einem der Ansprüche 1 bis 9 aufweist.

## Claims

1. An electric drive unit (2) for a motor vehicle, comprising:
(a) an electric motor (22) comprising a non-rotating stator (8) and a rotatably supported rotor (10);
(b) a planetary gear system (12) comprising a rotatable input connected to the rotor (10) for torque transmission and a rotatable output;
(c) a partition wall (46) between the internal space of the electric motor (22) and the internal space of the planetary gear system (12);
(d) a rotatable wheel carrier (6) that is connected to the output of the planetary gear system (12) for torque transmission;
(e) a stub axle component (4) supporting the electric motor (22), the planetary gear system (12) and the wheel carrier (6), the stub axle component (4) comprising a mounting portion (16) for mounting the drive unit (2) to the motor vehicle and a non-rotating stub axle portion extending from the mounting portion (16) into the electric motor (22), the planetary gear system (12), and the wheel carrier (6), and forming a support member for the rotor (10) of the electric motor (22), the input of the planetary gear system (12), the output of the planetary gear system (12), and the wheel carrier (6);
(f) a liquid cooling system providing cooling of the stator (8) of the electric motor (22);
(g) an air cooling system providing cooling of the rotor (10) of the electric motor (22); and operating by an airflow circulating and remaining inside the electric motor (22) and
(h) a heat sink in the electric motor (22) for taking up heat from the circulating airflow, the heat sink being an air/liquid heat exchanger (56) or a metallic member (102) cooled by a liquid.

2. A drive unit according to claim 1,
**characterized in that** the air cooling system is designed such that at least part of the circulating airflow flows along the partition wall (46) so that a substantial part of the lost heat of the planetary gear system (12) is transferred to the circulating airflow.

3. A drive unit according to claim 1 or 2,
**characterized in that** the electric motor (22) comprises an external rotor.

4. A drive unit according to claim 1 or 2,
**characterized in that** the electric motor (22) comprises an internal rotor.

5. A drive unit according to any of claims 1 to 4,
**characterized in that** the rotor (10) and/or a surface of the partition wall (46) directed towards the electric motor (22) is(are) designed to have surface roughness.

6. A drive unit according to any of claims 1 to 5,
**characterized in that** the rotor (10) and/or a surface of the partition wall (46) directed towards the electric motor (22) are provided with turbulence generators.

7. A drive unit according to any of claims 1 to 6,
**characterized in that** the rotor (10) has flow directing faces (60, 104) acting like blades in order to generate an airflow with a radial component.

8. A drive unit according to any of claims 1 to 7,
**characterized in that** the rotor (10) has openings (72, 106) extending between the rotor side closer to the planetary gear system (12) and the rotor side remoter from the planetary gear system.

9. A drive unit according to any of claims 1 to 8,
**characterized in that** a tire rim (14) is attached to the wheel carrier (16).

10. A motor vehicle comprising at least one electric drive unit (2) according to any of claims 1 to 9.

## Revendications

1. Unité d'entraînement (2) électrique pour un véhicule automobile, laquelle comporte :
(a) un moteur électrique (22) avec un stator (8) stationnaire et un rotor (10) monté de manière rotative ;
(b) un engrenage planétaire (12) avec une entrée rotative qui est liée au rotor (10) du moteur électrique (22) en vue de la transmission d'un couple de rotation, et une sortie rotative ;
(c) une cloison entre le volume intérieur du moteur électrique (22) et le volume intérieur de l'engrenage planétaire (12) ;
(d) un support de roue (6) rotatif qui est lié à la sortie de l'engrenage planétaire (12) en vue de la transmission du couple de rotation ;
(e) une fusée d'essieu (4) qui porte le moteur électrique (22), l'engrenage planétaire (12) et le support de roue (6), la fusée d'essieu (4) comportant une zone de fixation (16), pour fixer l'unité d'entraînement (2) au véhicule automobile, et une fusée d'essieu non rotative qui s'étend depuis la zone de fixation (16) dans le moteur électrique (22), dans l'engrenage planétaire (12) et dans le support de roue (6), et un élément de palier pour le rotor (10) du moteur électrique (22) forme l'entrée de l'engrenage planétaire (12), la sortie de l'engrenage planétaire (12) et le support de roue (6) ;
(f) un système de refroidissement de liquide pour le refroidissement du stator (8) du moteur électrique (22) ;
(g) un système de refroidissement d'air pour le refroidissement du rotor (10) du moteur électrique (22), qui travaille avec le flux d'air circulant, restant à l'intérieur du moteur électrique (22) ;
(h) et un dissipateur thermique dans le moteur électrique (22) pour recevoir la chaleur issue du flux d'air circulant, lequel est réalisé sous la forme d'un échangeur thermique air/liquide (56) ou sous forme d'élément métallique (102) refroidissant le liquide.

2. Unité d'entraînement (2) selon la revendication 1, **caractérisée en ce que** le système de refroidissement d'air est configuré de telle sorte qu'au moins une partie du flux d'air circulant est acheminée le long de la cloison (46), de telle sorte qu'une majeure partie de la chaleur dissipée par l'engrenage planétaire (12) est transmise dans le flux d'air circulant.

3. Unité d'entraînement (2) selon la revendication 1 ou 2, **caractérisée en ce que** le moteur électrique (22) comporte un rotor extérieur.

4. Unité d'entraînement (2) selon la revendication 1 ou 2, **caractérisée en ce que** le moteur électrique (22) comporte un rotor intérieur.

5. Unité d'entraînement (2) selon l'une quelconque des revendications 1 à 4, **caractérisée en ce que** le rotor (10) et/ou une surface de la cloison (46), orientée vers le moteur électrique (22), est (sont) réalisé(s) avec une rugosité de surface.

6. Unité d'entraînement (2) selon l'une quelconque des revendications 1 à 5, **caractérisée en ce que** le rotor (10) et/ou une surface de la cloison (46), orientée vers le moteur électrique (22), est (sont) réalisé(s) avec des générateurs de turbulences.

7. Unité d'entraînement (2) selon l'une quelconque des revendications 1 à 6, **caractérisée en ce que** le rotor (10) comporte des surfaces directrices d'écoulement (60, 104) agissant comme des ailettes, afin de générer un flux d'air avec des composantes radiales.

8. Unité d'entraînement (2) selon l'une quelconque des revendications 1 à 7, **caractérisée en ce que** le rotor (10) comporte des ouvertures (72, 106) qui s'étendent entre le côté du rotor à proximité de l'engrenage planétaire (12) et le côté du rotor éloigné de l'engrenage planétaire (12).

9. Unité d'entraînement (2) selon l'une quelconque des revendications 1 à 8, **caractérisée en ce que** le support de roue (6) est fixé à une jante (14).

10. Véhicule automobile qui comporte au moins une unité d'entraînement (2) électrique selon l'une des revendications 1 à 9.
